# EUROPEAN PATENT APPLICATION

(11) **EP 0 908 332 A1**
(43) Date of publication of application: **14.04.1999**
(21) Application number: 98118751.1
(22) Date of filing: 05.10.1998
(51) Int. Cl.: B60C 25/132

(54) **Roller for mounting and removing vertical fitting tires and tire changing machine provided with such a roller**

(30) Priority: 13.10.1997 IT VR970053 U
(71) Applicant: BUTLER ENGINEERING & MARKETING S.r.l., I-42010 Rio Saliceto (Prov. of Reggio Emilia) (IT)
(72) Inventor: Gonzaga, Tullio, 42015 Correggio, Prov. of Reggio Emilia (IT)
(74) Representative: Modiano, Guido, Dr.-Ing.

(57) **Abstract**

A roller (1) for mounting and removing vertical fitting tires (2) which can be fitted on a tire changing machine (10), comprising at least one annular groove (6) formed proximate to one of its peripheral edges, so as to delimit therewith a relatively narrow ridge (7) which is suitable for penetrating, in use, between the tire bead (3) and a wheel rim (4) and delimiting a seat for slide guiding of the tire bead (3).

## Description

The present invention relates to a roller particularly suitable for mounting and removing tires of the vertical fitting type (PAV) on a respective wheel rim, and to a tire changing machine provided with such a mounting and removing roller.

In recent years a new type of tire of the so-called vertical fitting kind has been developed (reference should be made in this regard to international application WO 95/3362 in the name of Michelin) which has enlarged beads and uses wheel rims whose outer edge is lower than in conventional wheel rims. With such tires, the mounting and removal tools normally employed with conventional tires to a large extent cannot be used.

The aim of the present invention is to provide a tool which is very simple, handy and efficient for quick mounting and removal of PAV tires.

Within the scope of this aim, an object of the present invention is to provide a tool which can be adapted easily to a tire changing machine having a rotating worktable of any suitable kind.

Another object of the present invention is to provide a tool which is reliable and safe in operation, durable and cheap to manufacture.

Another important object of the present invention is to provide a tire changing machine having one or more mounting and removal rollers according to the invention.

According to a first aspect of the present invention, there is provided a roller for mounting and removing vertical fitting tires which can be fitted to a tire changing machine by means of a supporting arm and is characterized in that it comprises at least one annular groove formed proximate to a peripheral edge thereof, so as to delimit therewith a relatively narrow ridge which is arranged to penetrate, in use, between the tire bead and the wheel rim and to provide a seat for slide guiding of the tire bead.

According to another aspect of the present invention, there is provided a tire changing machine which has a rotating worktable and comprises at least one roller supporting arm, which can be moved between a working position, respectively above and below a wheel rim arranged on the rotating worktable and a resting position away from the worktable, and at least one rotatable roller which is supported in a cantilevered manner by the or by a respective roller supporting arm and is provided with at least one annular groove proximate to a peripheral edge thereof to delimit a relatively narrow ridge which is arranged to penetrate, in use, between the tire bead and the wheel rim and to provide a seat for slide guiding of the bead edge.

Advantageously, the or each roller supporting arm is provided with drive means in order to force its respective roller or rollers to enter between the bead and the edge of a wheel rim on the rotating worktable.

The invention is further described hereinafter with reference to the accompanying drawings, wherein:
Figures 1 and 2 show each a partly diagramatic view, with parts cut-away, of a wheel rim for a PAV tire and of a roller according to the invention in two different positions, i.e. an approaching position and a working position between the tire bead and the edge of the wheel rim;
Figure 3 is a diagramatic view, with parts cut-away, of a tire changing machine provided with a roller supporting arm having a single roller provided with an annular end groove for mounting and removing PAV tires; and
Figure 4 is a view, similar to Figure 3, of a tire changing machine with two roller supporting arms designed to act from above and from below on a wheel assembly.

In the accompanying drawings, identical or similar parts have been designated by the same reference numerals.

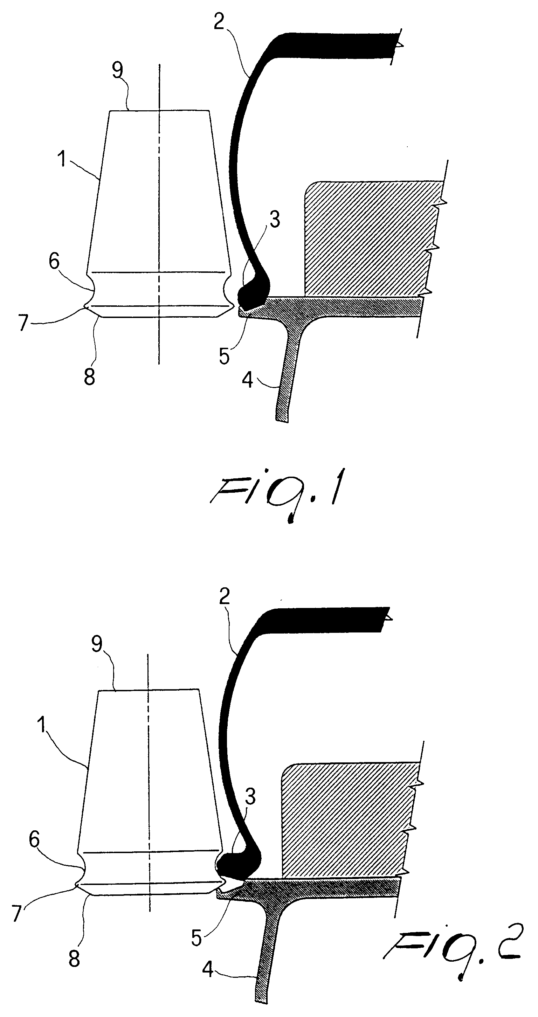

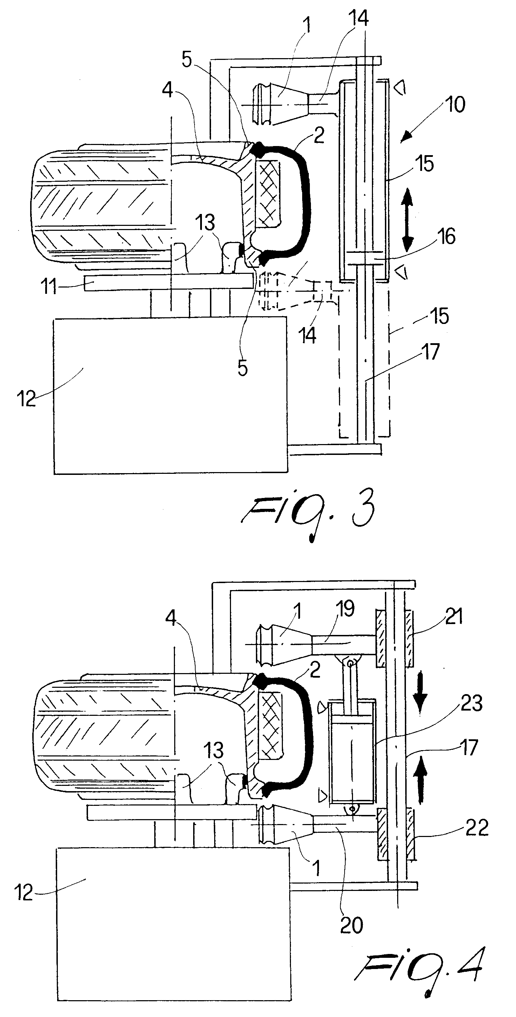

With reference first to Figures 1 and 2, it will be seen that a roller 1 for mounting and removing a vertical fitting tire (PAV) 2, which is provided with a bead 3 and can be mounted on a suitable wheel rim 4 having a peripheral edge 5, has a characteristic annular groove 6 proximate to an end thereof, which delimits a circumferential end ridge 7. The annular groove 6 is designed to perform a dual function, i.e. first of all to contribute in delimiting the ridge 7 and above all to constitute, in use, a seat for accommodating and slidingly guiding a portion of the edge of the tire bead, as shown in Figure 2.

Owing to the presence of the annular groove 6, the edge of the tire bead 3 has a reference seat which assists both in causing the roller 1 to penetrate the wheel assembly down to the correct position and in helping to keep the roller guided during an entire mounting or removal operation.

Preferably, at the end of the roller 1 and adjacent to the end ridge 7 a peripheral chamfer 8 is provided which delimits a wedge-like annular surface for easier penetration between the edge 5 of the wheel rim 4 and the bead 3 of the tire (Figure 2), particularly for tire removing operations.

The depth and width of the groove 6 are not critical but must be sufficient to delimit an effective ridge 7.

Roller 1, apart from its end groove 6, can have any suitable configuration, for example a frustum-shaped configuration which tapers toward the end 9 far away from the groove 6, as shown in the drawings, or a cylindrical one or even a frustum-shaped configuration which widens toward the end 9 or the like.

Figure 3 schematically illustrates a tire changing machine 10 provided with a rotating worktable 11 on a footing 12 and with engagement means, generally designated by the reference numeral 13, e.g. constituted by three expanding arms for the wheel rim 4 of a tire-and-wheel assembly arranged on the worktable 11. The worktable can be mounted for rotation both about a vertical axis x-x, as shown in the drawings, and about an axis having any chosen inclination with respect to the vertical.

The machine 10 has a roller supporting arm 14 which extends from the cylinder 15 of a double-acting jack, which is connected in any suitable manner to a source of pressurized fluid, not shown. The piston 16 of said jack is fixed to a post 17 which is substantially parallel to the axis of the rotating worktable 11. The cylinder 15 can rotate about the post 17, so that the arm 14 can be angularly moved between a working position, respectively above and below a wheel rim 4 locked on the rotating worktable 11 by the arms 13, and a rest position away from the worktable 11. The arm 14 and thus the roller 1 can be pushed downwards or upwards along the post 17, thereby forcing the ridge 7 of the roller 1 between the upper or lower edge 5 of the wheel rim 4 and the bead 3 of the tire for a tire removal or mounting operation, which is performed by taking advantage of the combined action of rotation of the rotating worktable 11 and pressure applied by the free roller 1 shaped as described above, first on the lower side and then on the upper side of the wheel assembly or viceversa.

The tire changing machine 18 shown in Figure 4 has two roller supporting arms 19 and 20, each of which extends outwardly from a respective sleeve 21 and 22, respectively, which is slideably mounted along the post 17. The arms 19 and 20 are mutually connected by a double-acting jack 23 which can be connected to a suitable source of pressurized fluid, which causes the two arms 19, and thus the two freely rotating rollers 1 supported by them, to move closer to or away from one another for carrying out mounting or removal operations of tire 2 as specified above.

The invention as described above is susceptible to undergo numerous modifications and variations within the scope of the invention as defined by the appended claims.

The disclosures in Italian Patent Application No. VR97U000053 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A roller for mounting and removing vertical fitting tires which can be fitted to a tire changing machine, characterized in that it comprises at least one annular groove (6) formed proximate to a peripheral edge thereof, so as to delimit therewith a relatively narrow ridge (7) which is suitable for penetrating, in use, between the tire bead (3) and a wheel rim (4) and to provide a seat for slide guiding of the tire bead (3).

2. A roller according to claim 1, characterized in that it comprises an outer peripheral chamfer (8) adjacent to its end ridge (7) and delimits a wedge-shaped annular surface for easier penetration between the edge of the wheel rim (4) and the tire bead (3).

3. A roller according to claim 1, characterized in that it has a frustum-shaped body.

4. A roller according to claim 1, characterized in that it has a cylindrical body.

5. A tire changing machine provided with a rotating worktable (11), characterized in that it comprises at least one roller supporting arm (14) which can be moved between a working position, respectively above and below a wheel rim (4) arranged on the rotating worktable (11), and a resting position away from the worktable (11), and at least one roller (1) which is mounted for rotation on the, or its respective roller supporting arm (14) and is provided with at least one annular groove (6) proximate to a peripheral edge thereof, so as to delimit a relatively narrow ridge (7) which is arranged to penetrate, in use, between the tire bead (3) and the wheel rim (1) of a wheel assembly and to provide a slide guiding seat for the tire bead (3).

6. A machine according to claim 5, characterized in that the or each roller supporting arm (14) has drive means for forcing its respective roller or rollers (1) between the bead (3) and the edge of a wheel rim (4) arranged on the rotating worktable (11).

7. A machine according to claim 6, characterized in that said drive means comprises a fluid-actuated unit of the double-acting cylinder (15) and piston (16) type, the piston (16) of said fluid-actuated unit being secured to a guide (17) which lies substantially parallel to the rotation axis of the worktable (11) and the cylinder of said fluid-actuated unit being mounted for rotation about the post (17), and in that it comprises a roller supporting arm (14) which extends cantileverwise from the cylinder (16) of said fluid-actuated unit.

8. A machine according to claim 6, characterized in that it comprises two roller supporting arms (19,20), each of which extends cantileverwise from a respective sleeve (21,22) mounted for sliding along, and rotating about, a guide (17) which extends substantially parallel to the axis of rotation of said rotating worktable (11), and a double-acting fluid-actuated unit (23) of the cylinder and piston type connecting the said supporting arms, which is designed to cause simultaneously said arms (19,20) to move closer to or away from one another for mounting and removal operations.
